(19) Europäisches Patentamt
European Patent Office
Office européen des brevets

(11) **EP 4 556 261 A1**

(12) **EUROPEAN PATENT APPLICATION**

(43) Date of publication:
**21.05.2025   Bulletin 2025/21**

(21) Application number: **23306993.9**

(22) Date of filing: **17.11.2023**

(51) International Patent Classification (IPC):
**B60C 11/24** *(2006.01)*      **B60C 23/06** *(2006.01)*

(52) Cooperative Patent Classification (CPC):
**B60C 11/246;** B60C 23/06; B60C 23/067

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ALSTOM Holdings**
**93400 Saint-Ouen-sur-Seine (FR)**

(72) Inventors:
• **Gregoire, Hugues**
**Quebec, J3V 2L1 (CA)**

• **Cousture, Damien**
**Quebec, J4K 3V8 (CA)**
• **Scott, Finlayson**
**Ontario, K8N 0K3 (CA)**
• **Hazrati Ashtiani, Iman**
**Quebec, J4N 0H6 (CA)**
• **Monette, Mario**
**Quebec, J3L 6Y8 (CA)**

(74) Representative: **Brunotte, Joachim Wilhelm Eberhard**
**Patentanwälte Bressel und Partner mbB**
**Potsdamer Platz 10**
**10785 Berlin (DE)**

(54) **FORECASTING A LIFESPAN OF A TIRE INSTALLED ON A VEHICLE, IN PARTICULAR ON A TRACK-BOUND VEHICLE, SUCH AS A MONORAIL VEHICLE**

(57)    The invention relates to a method for forecasting a lifespan of a tire installed on a vehicle, the method comprising:
- repeatedly determining (by device 30) a value of a first quantity, optionally based on information provided by Sensors S1, S2, S3, S4, the first quantity being a measure for a load imposed by the vehicle onto the tire installed on the vehicle;
- transmitting the determined values of the first quantity to a forecasting device 32; and
- using the forecasting device (32), calculating a forecasted lifespan of the tire based on the determined values of the first quantity.

Fig. 4

EP 4 556 261 A1

**Description**

The present invention generally relates to the field of vehicles, in particular to track bound vehicles, more particularly monorail vehicles, automatic people movers and/or metro vehicles. More specifically, the invention relates to a method of forecasting the lifespan of a tire installed on a vehicle. Furthermore, the invention relates to a method of preparing forecasting the lifespan of a tire installed on a vehicle and an arrangement for forecasting a lifespan of the tire.

Although tires used on commercial or mass-transit vehicles are designed to last for long distances, they nevertheless represent a significant portion of maintenance costs as these vehicles travel high distances every year. Indeed, mass transit vehicles such as buses, metros and monorails, or commercial vehicles such as lorries may easily travel over 100,000 kilometres (about 62,000 miles) every year. On some of these vehicles, such as monorails, the combination of catastrophic consequences of tire failure with cumbersome tire replacement, where the vehicle must be taken out of service, call for the careful planning of tire replacement. Because tread wear is often not the end-of-life determining factor of heavily loaded tires, such as those used on mass transit vehicles like monorails for example, and in the absence of accurate methods of predicting the life of those tires, it is customary to replace tires more often than may be necessary. This leads to operating costs that are higher than they could be.

Many existing solutions focus on monitoring or detecting the depth or the state of wear of tire treads. However, tires used on heavily loaded vehicles may need preventive replacement not due to their treads being worn out, but rather due to their internal construction being fatigue damaged by such repeated high loads. Hence, solutions such as the method for detecting the wear of a tire based on the acquisition of an acoustic signal representative of a state of wear of the tire, as disclosed in US 2012 266 649 A1, are of no assistance in these cases.

There is therefore a need for a method of forecasting the life of a tire installed on a vehicle, especially for those tires that are heavily loaded, the method avoiding and/or weakening at least one of the disadvantages mentioned above, or at least provides a useful alternative.

The invention provides the advantage of forecasting tire lifespan not or not solely based on tread depth, which may be more significant for tires used on heavily loaded vehicles. Forecasting tire lifespan may be done, for example and as described below, by forecasting an end and/or a limit of the operation of the tire.

The term lifespan means an expected span of future use of the tire installed on a vehicle. Since vehicles, and therefore tires installed on the vehicles, can be used more or less frequent in a given time interval of for example one year, it is preferred to measure the lifespan in vehicle operation time and/or vehicle travel distance. Preferably, the forecasted lifespan is measured in units of distance.

Optionally, the forecasted lifespan may be calculated and stated depending on at least one quantity and/or or at least one parameter. In this manner, the operator of a vehicle or a vehicle fleet may decide to increase the lifespan by choosing or limiting values of the at least one quantity and/or of the at least one parameter. Quantities and parameters on which the lifespan depends or may depend will be described later. To give a first example, the quantity may be a load imposed by the respective vehicle onto the tire or a quantity that is derived from this load (such as a load profile over an operation time interval). The parameter may be a parameter describing a condition of the track on which the vehicle travels, such as a parameter representing a rough condition in case of an uneven track surface or a parameter representing a smooth condition in case of an even track surface.

It is however also possible to state the forecasted lifespan not depending on any quantity or parameter. This does not exclude to state, or refer to, a value and/or limit value of a quantity and/or of a parameter, on which quantity or parameter the lifespan may depend. For example, the forecasted lifespan may depend on the load profile (i.e. the development of the load over the time) and/or the parameter describing the condition of the track mentioned above. From this information, the operator may derive for example that the forecasted lifespan is valid, provided that the vehicle on which the tire is installed does not impose a load over time that causes more stress to the tire than in case of the stated load profile and/or provided that the vehicle does not travel on rougher track surfaces than stated by the parameters describing the condition of the track.

In particular, the method of forecasting the lifespan is based on the assumption that the lifespan is significantly dependent on cumulative internal damages of the material of the tire, especially within the sidewall of the tire and that the effect of other causes of wear of the tire tread is less important or can be neglected when calculating the lifespan. The internal damages of the tire material are mainly caused by repeated deformation of the sidewalls of the tire during travel of the vehicle. In particular, the lower sidewall of the tire is deformed. When the tire rotates while the vehicle is traveling, the different regions of the tire are subjected to loading and unloading cycles. Regions of the sidewall move into the zone below the wheel rim and are deformed. When the respective sidewall region leaves the zone below the wheel rim the deformation is continuously reversed. Since the deformation and its effect on the internal damages may also depend on other influences, it is preferred that not only the load on the tire is considered, but also at least one further quantity and/or parameter that describes the other influences.

In particular, there is provided a method for forecasting a lifespan of a tire installed on a vehicle. The method comprises

- repeatedly determining a value of a first quantity, the first quantity being a load imposed by the vehicle onto the tire installed on the vehicle;
- transmitting the determined values of the first quantity to a forecasting device; and
- using the forecasting device, calculating a forecasted lifespan of the tire based on the determined values of the first quantity.

In addition, an arrangement is proposed for forecasting a lifespan of a tire installed on a vehicle, the arrangement comprising:

- a determining device configured to repeatedly determine a value of a first quantity, the first quantity being a measure for a load imposed by the vehicle onto the tire installed on the vehicle; and
- a forecasting device configured to calculate a forecasted lifespan of the tire based on the determined values of the first quantity.

Embodiments of the method correspond to embodiments of the arrangement and vice versa. For example, if an embodiment of the method comprises a method step, a corresponding device of the arrangement is configured to perform the method step. Vice versa, if a device of the arrangement is configured to perform a method step, this method step is part of a corresponding embodiment of the method.

By repeatedly determining a value of a quantity, in particular of the first quantity or of a further quantity (see below for the further quantity), the respective quantity is determined as a function of time. Depending on the kind of quantity and/or depending on the way how values of the quantity are determined, the repetition rate of sampling the information about the values and/or the repetition rate of measuring the values may differ. In fact, the time differences between two consecutive sampling and/or measuring times may be constant, at least during travel of the vehicle, or may differ. For some kinds of quantities and/or for some measurement sensors, it is preferable to determine at least some of the values of the respective quantity for points in time or time intervals during travel of the vehicle. This is particularly true for an embodiment of the method of preparing forecast (see below) if for example the load profile is determined by using a sensor that measures amplitudes of elastic deformations of the vehicle's suspension system. This is preferably also true for determining a speed of the vehicle, a rotational speed of the tire, an acceleration of the vehicle, a deceleration of the vehicle, a torque of a motor driving the tire, a temperature of the tire, a pressure of the tire or a vehicle ambient temperature. of course, the values of the respective quantity can optionally be determined based on sampling (i.e. taking individual values) a continuously or quasi-continuously measured quantity, such as the shift and/or position of a part of the vehicle's suspension system. This measured quantity can, not only in this case, be a different quantity than the quantity of which the values are determined and transmitted to the forecasting device or evaluation device.

At least one sensor for obtaining information about the first quantity may be located on board the vehicle, wherein the sensor is communicatively connected to the determining device and the arrangement is adapted to transmit the information about the first quantity to the determining device so that the determining device is capable of determining the values of the first quantity.

The forecasting device may be provided and/or arranged on board and/or off board the vehicle. For example, a computer on board the vehicle may perform the calculation of the forecasted lifespan. Alternatively, the value of the first quantity may be transmitted from the vehicle to a vehicle-external arrangement, such as a single computer or computer arrangement (e.g. located in a control center of the vehicle operator). This computer or computer arrangement may implement the forecasting device. It is also possible that steps of the calculation of the forecasted lifespan are partly performed on board of the vehicle and are partly performed off board of the vehicle.

Preferably, the calculated forecasted lifespan is output, in particular by an output device, such as a display. In addition, or alternatively, the calculated forecasted lifespan may be transmitted to a storage device, such as a digital data storage which may be accessible by a computer, and/or may be transmitted to a system that will provide instruction for vehicle maintenance.

The determining device may comprise or consist of at least one sensor. The sensor or any one of the sensors may directly or indirectly measure the load of the vehicle imposed onto the tire. A direct measure is for example the weight force acting on the tire and it can be measured for example by measuring a compression and/or an elongation of at least one elastically deformable element of a suspension system of the vehicle. By taking the relation between the elastic deformation and the required force for deformation into account, the deformation is a direct measure of the load. In particular, the tire deformation can be measured using at least one laser-based position or position difference sensor and/or at least one ultrasonic sensor that measures a position or position difference. The position may be a height position and the position difference may be a difference of height positions (e.g. a variable hight position with respect to reference height position). in particular, the ultrasonic sensor may measure the extension of a rubber part of the vehicle's suspension system in height direction (i.e. vertical direction).. Another option of a sensor that directly measures the load is a force sensor, such as a strain gauge or a piezoelectric sensor. A sensor that measures a quantity which is an indirect measure of the load may be a mass sensor or an acceleration sensor combined with a sensor that directly or indirectly measures a traction force of the vehicle which causes the acceleration. In particular, the mass of the vehicle can be calculated by taking into account the traction force and the acceleration, for example by dividing the force by the acceleration. The load imposed on the tire can be considered as proportional to the mass in many cases. Of course, the load caused by the mass is to be distributed over the plurality of tires installed on the vehicle when the load onto a single tire is considered. A further indirect measure of the load is the pressure within the tire. Another indirect measure is the pressure of an air spring that is part of the suspension system of the vehicle. The pressure is higher if the load is higher. Another measure of the load is the force or part of the force exerted by the mass of the vehicle (or of the vehicle's carbody) onto the tire(s). For example, this force can be directly measured, e.g. by using a force sensor like a so-called load cell. Force sensors may comprise a piezo-electric sensor element or a strain gauge in order to measure the force. According to another embodiment, the force can be determined indirectly by a force estimator.

In particular, the load or the measure for the load can be used to determine a deformation of the tire. Approximately, the deformation can be assumed as being proportional to the load, but it is preferred to determine and/or use a non-linear relation between the deformation and the load. Furthermore, the load of the vehicle onto the tire can be measured by measuring the deformation of the tire, in particular the deformation of one of the sidewalls of the tire below the wheel rim. Therefore, the first quantity may be the deformation of the tire. At least one laser-based position sensor or position difference sensor can be used. "Position difference" means that the primary measuring signal is caused by a shift of the position of an observed part, in particular the surface of the sidewall of the tire below the wheel rim. The shift of the position may be detected, for example, by a laser interference sensor in which the position shift causes a change of the path length of one path of the laser beam, while the path length of another path of laser beam does not substantially change. Changes of the interference of the laser beams along the two different paths allow for counting the wave lengths that correspond to the position shift.

It is preferred that the first quantity is measured once or a few times after an event at which the load imposed by the vehicle onto the tire has changed. Such an event especially occurs and for a typical operation of the vehicle only occurs at a stop of the vehicle when passengers and/or goods enter or leave the vehicle. For example in the case of a monorail people mover, people (i.e. passengers) enter or leave the vehicle at a station. Typically, at least some of the passengers carry luggage with them. It follows from this description that there is another option to measure the load that is imposed by the vehicle onto the tire: the number of passengers who are entering the vehicle, and optionally of their luggage, may be counted, in particular using at least one camera and related image processing means (e.g. implemented by software running on a computer or an arrangement of computers). For example, the number may be counted at a passenger access barrier that has to be passed by each passenger when he or she would like to enter the vehicle. An average weight per passenger can be taken and can be multiplied by the number to obtain the total weight (to be more precise: to obtain the increase of the total weight). In many cases, such as in case of people movers used at airports, it can be assumed that all passengers leave the vehicle at a specific station. There is no need to measure the load for situations where the "empty vehicle" does not comprise any passenger and/or goods, if the load of the empty vehicle is known or if calculating the lifespan is based on deviations of the load (i.e. increased loads) compared to the load imposed by the empty vehicle. Another term for "empty vehicle" may be "non-occupied vehicle". In this description, the term "empty vehicle" includes the case that the vehicle is equipped with seats, holding handles/bars and other interior equipment. In addition or alternatively to counting, the weight of the entering passengers including their luggage can be measured, such as by at least one scale integrated in a platform at a station. However, since loading and/or unloading the vehicle is often repeated while the tire is mounted on the vehicle, the first quantity is measured repeatedly.

In particular the forecasting device can be computer-implemented. In addition or alternatively, all method steps or at least some of the method steps of the method (described above and/or below) of preparing forecasting the life of a tire, optionally with the exception of determining values of a quantity, can be computer-implemented. The determination of the values of any quantity and the determination of any parameter can be performed automatically, in particular by using at least one sensor for each quantity and optionally an evaluation device which may be a computer. Optionally, the determining device can be connected to or at least partially integrated in a computer. For example, the at least one sensor mentioned above can be directly connected to the computer. The term "computer" optionally includes an arrangement of computers. The computer may be a single computer or a computer network, or may comprise the computer or the computer network. With respect to its mode of operation, the computer or at least one of the computers may be, in particular, an analog computer, a digital computer, and/or a hybrid computer. With respect to its size and design, it may be, in particular, a smartphone, a personal digital assistant (PDA), a tablet computer, an embedded system (e.g. embedded in the control computer of a railway network), a single- or multi-board computer, a personal computer (PC), a desktop computer, a workstation computer, a host computer or server integrated into a computer network, a thin client computer, a netbook, a notebook, a laptop, a mainframe computer, or a supercomputer, although some of the above types may also be implemented by a single computer such as a multi-board PC. Further, the computer or at least one of the computers may have one or more central processing units (CPU) and/or one or more computational cores per CPU. Also, graphics cards or even other dedicated cards with processing units that are part of a computer may exclusively or in combination with other computers or processing units constitute the means for carrying out the method step of forecasting the lifespan of the tire.

According to a preferred embodiment, the forecasting device calculates the forecasted lifespan not only based on the determined values of the first quantity, but also based on at least one further quantity and/or based on at least one parameter. In case of a further quantity, that is measured so that corresponding values are determined, these values are transmitted to the forecasting device as well, although the ways/paths of transmission may differ or may be the same for the different quantities.

Bearing this in mind, the condition of the track on which the vehicle travels has an effect on the lifespan of the tire and it is preferred to take the condition of the track into account when calculating the lifespan. In particular, the condition of the track can be determined by repeatedly determining a value of a measurable quantity during movement of the vehicle on the track. For example, a frequency and/or an amplitude of vibrations can be measured, especially vibrations of a part of the vehicle. The part may be a component in close proximity to the tire or may even be the tire itself. For example, the component may be installed on the bogie that comprises the tire, such as a bogie frame. Alternatively, it may be a wheel rim. Vibrations of the tire itself may be measured by measuring fluctuations of the tire pressure by using a tire pressure sensor. It is also possible, to measure vibrations of different parts of the vehicle in order to obtain information about the track conditions.

A simpler approach relies on existing information about the condition of the track. For example, the track may be examined once or from time to time and it can be assumed that the condition of the track does not alter or does not alter until it is examined again. In these cases, a parameter (i.e. a characteristic constant) can be determined that characterizes the condition of the track. One sensor type that may be used to examine the track once or from time to time is a laser sensor that measures the variation of the height position during travel.

Therefore, according to an embodiment of the method, the method further comprises: determining a value of a first parameter, in particular the first parameter being a track condition parameter that describes a condition of a track on which the vehicle travels. For example, the first parameter can be determined based on information collected while the vehicle travels on the track. According to one example, pitch and/or roll of a vehicle bogie, to which the tire or tires are mounted, can be measured in order to obtain this kind of information on the condition of the track. Pitch involves repeated rotation about a rotation axis extending in horizontal direction transverse to the direction of travel of the vehicle. Roll involves repeated rotation about a rotation axis extending in the direction of travel of the vehicle. For example, these rotational movements can be measured using sets of distance sensors measuring the distance of a vehicle part, in particular of a bogie part such as the bogie frame, to the track surface. The different distance sensors of the respective set of sensors may be located, for example, near the front and near the back of the bogie.

Further measurable quantities, at least one which or any combination of which can be taken into account by the forecasting device in the calculation of the forecasted lifespan, are: a speed of the vehicle, a rotational speed of the tire, a distance travelled by the vehicle, a distance travelled by the tire, an acceleration of the vehicle, a deceleration of the vehicle, a load carried by the vehicle, a torque of a motor driving the tire, a temperature of the tire, a pressure of the tire and a vehicle ambient temperature. Moreover, the transmitting may further comprise transmitting the at least one further quantity to the forecasting device. Its calculation may further comprise calculating the forecasted lifespan also using this at least one further quantity.

More generally speaking, determining the value or values of any of the quantities, which values are taken into account by the forecasting device, may comprise determining a reference value of the respective quantity while the vehicle is substantially static. This reference value of the respective quantity may be determined at predetermined events. Optionally, the state of the system in static condition (sensor values while the vehicle is not moving) may serve as a setpoint to calibrate and/or inspect the sensor(s) and identify any defect in the sensor signals.

Optionally, the calculation of the forecasted lifespan may further comprise determining a variation of the respective quantity occurring while the vehicle is in motion and/or over a time interval comprising different periods of motion and in each case one halt in between two consecutive periods of motion. In particular, the values of the respective quantity can be determined based on the reference value and the variation.

Optionally, the calculation of the forecasted lifespan may further comprise revising the forecasted lifespan of the tire based on further (subsequent) measurements of the first quantity and/or of at least one further quantity or parameter. If even more precision is required, the calculating may even further comprise revising the forecasted lifespan of the tire based on further (subsequent) measurements of the at least one second parameter.

Optionally, the calculating may further comprise calculating a cumulative tire wear index indicative of a cumulative wear of the tire.

Optionally, the forecasting device may be located aboard the vehicle. Alternatively, the forecasting device may be located remotely from the vehicle, for example in a control center for controlling operation of a plurality of vehicles.

Optionally, the vehicle may be a track-bound vehicle and/or a mass-transit vehicle, in particular a driver-less vehicle. The vehicle may be, for example, a monorail vehicle, an automated people mover and/or a metro vehicle.

In accordance with an embodiment of the present invention, there is provided a method of predictively maintaining a vehicle. This method of predictively maintaining the vehicle comprises dismounting a tire on the vehicle when the tire has substantially reached (or alternatively: has reached) the forecasted lifespan determined by the method as defined above and/or below.

Optionally, the at least one further quantity may be the distance travelled by the vehicle while the tire is installed on the vehicle, the replacing occurring when (or alternatively: substantially when) the forecasted lifespan corresponds to the distance travelled or a predetermined defect is observed in the tire.

On the other hand, it is preferred that the forecasted lifespan is repeatedly updated, in particular each time for a situation after the vehicle has travelled a distance since the time or since the kilometre (or mileage) reading for which the previously valid value of the forecasted lifespan was calculated. This travelled distance may, for example, be a distance between two stations on a track of the vehicle. Especially, it is therefore possible to consider important influences on the reduction of the forecasted lifespan with respect to the distance travelled. Besides the travelled instance, the load and optionally the load profile (see above and below) is/are important influencing quantities. Preferably, the temperature and/or pressure of the tire and/or of the ambience of the vehicle and/or the tire pressure may be considered as well.

In order to be capable of calculating the forecasted lifespan, the forecasting device requires information about the aging behavior (could alternatively be referred to as "deterioration behavior") of the tire. In particular, the forecasting device may use a deterioration model of the tire that models the aging behavior. The model is not limited to any failure mode of tire and may include (but not limited to) the tire wear, cracks inside and outside of the tire, sidewall fatigue, bead seal life et cetera. There are in principle at least two different approaches to obtain the information about the aging behavior, which different approaches can also be combined.

According to a first, non-destructive approach, there is at least one state variable which describes the state of the tire, such as elasticity of the tire and/or grade of damage and/or fatigue (in the following collectively referred to by "damage") of the tire structure. The state variable can be measured repeatedly, in particular while a minimum load is imposed by the vehicle on which the tire is installed. The minimum load should have the same amount every time when the elasticity is measured. In case of elasticity, a defined force can be applied to the tire and the resulting deformation can be measured. In case of the grade of damage, there are destructive and non-destructive methods. A non-destructive method is based on intrusive radiation (e.g. X-ray radiation) that intrudes into the material of the tire in order to gain information about any damage, such as micro cracks. For example, the lengths and/or density of cracks can be used to determine the rate of damage.

According to a second, destructive approach, the tire can be cut into at least two different pieces and the grade of damage can be determined by examining the density and/or lengths of cracks. In addition, any other state variable describing the aging state of the tire can be applied as well to the at least two different pieces of the destructed tire.

As briefly mentioned above, the present invention also relates to a method of preparing forecasting the lifespan of a tire installed on a vehicle. The method comprises:

- repeatedly determining a value of a first quantity, the first quantity being a load imposed by the vehicle onto the tire installed on the vehicle;
- determining an aging state (alternatively, can be named "deterioration state") of the tire based on at least one tire aging state quantity after use of the tire;
- defining or obtaining a criterion for an end of a lifespan of the tire, wherein fulfilment of the criterion can be determined by consideration of the at least one tire aging state quantity;
- transmitting the determined values of the first quantity and of the aging state to an evaluation device; and
- by using the evaluation device, defining an aging model (i.e. a tire life prediction model) that allows to forecast a lifespan of the tire depending on the first quantity.

When the description of the method of preparing forecast mentions "a tire" or "the tire" this particularly refers to a specific type of tires. Since determining the remaining life of tire and/or determining the deterioration process of the tire's deterioration in many cases requires destructive methods, such as cutting the tire in pieces, the particular tire has not only reached to its end of life, but has been destructed as well. However, the result of the method of preparing forecast is the model that can, of course, be applied to tires of the same type.

Like the method for forecasting a lifespan of a tire, the method of preparing forecast may take into account at least one further quantity and/or parameter, as described elsewhere for embodiments of the method for forecasting the lifespan. In fact, the method for forecasting the lifespan requires in particular that the same quantity or quantities and optionally parameter(s) (i.e. the same input information) are considered by the method of preparing forecast, so that it is known how the deterioration and/or remaining life of tire depends on this input information.

The tire life prediction model may be a purely mathematical model. For example, the model may describe the consumed or remaining life of the tire depending on the input information, wherein each variable that describes one quantity or parameter of the input information may be multiplied by a constant factor. In addition or alternatively, the quantity or parameter may occur in the model with different exponents (e.g. any combination of the exponents 1, 2, 3, ...) or an exponent that is not an integer number may be determined. Again, each term of the mathematical model that comprises a quantity or parameter that has an exponent may be multiplied by in each case an individual constant factor and in case of more than one term these terms may be added to define the aging of the tire. In a special case, the influence of each quantity or parameter on the aging of the tire may be described by a polynomial. more generally speaking, the aging can be a mathematical function of the respective quantity or quantities and optionally of at least parameter, wherein at least one constant number of the function (such as a constant factor or exponent as mentioned above) is to be determined. This at least one constant number can, in particular, be determined by fitting the observe life behaviour to the input information ( at least one quantity and optionally at least one parameter), taking into account the determined aging state. In particular, it is not only possible to determine the aging state once, but the aging state can alternatively be determined after in each case one phase of aging (e.g. a phase or time interval during which the tire is used while mounted on a vehicle). Alternatively to using the same tire in consecutive phases of aging and determining the aging state by non-destructive methods, different tires of the same type can be used. For example, a first tire can be used in a shorter phase of tire deterioration (for example over a shorter total travel distance of the vehicle) and a second tire can be used in a longer phase of deterioration (for example over a longer total travel distance of the vehicle).

In a further, alternative embodiment of the invention, a computer-implemented method is used for training a trained machine learning algorithm, the algorithm being constituted for forecasting a lifespan of a tire installed on a vehicle. The method comprises the following steps:

a) providing a first training data set comprising a plurality of values of a first quantity, the first quantity being a measure for a load imposed by the vehicle onto the tire installed on the vehicle;
b) providing a second training data set comprising values of a forecasted lifespan of the tire, wherein respective values of the first training data set and the second training data set are provided as training pairs; and
c) training the machine learning algorithm by an optimization algorithm which computes an extreme value of a loss function.

The trained machine learning algorithm can be the basis for a computer-implemented method for forecasting a lifespan of a tire.

In a preferred embodiment of a computer-implemented method for forecasting a lifespan of a tire installed on a vehicle, the method comprises:

a) receiving a time series of values of a first quantity (i.e. the values of, the first quantity are each valid for one point in time and the different points in time define the time order of the series), the values of first quantity being measures for a load imposed by the vehicle onto the tire installed on the vehicle;
b) applying a machine learning algorithm to the time series of values of the first quantity in order to forecast a lifespan of a tire installed on a vehicle; and
c) outputting a score representing the lifespan of the tire installed on a vehicle.

Furthermore, a system is proposed for forecasting a lifespan of a tire installed on a vehicle, the system comprising the trained machine learning algorithm.

Therefore, the machine learning algorithm can be trained in particular by using the above-mentioned training data and then can be used to forecast the lifespan of the tire. In particular, the training can be repeated from time to time.

As briefly mentioned above, different load profiles (in particular different developments of the load over time) can be applied and taken into account. According to a preferred embodiment of the method different load profiles, namely the load as a function of time imposed by the vehicle onto the tire installed on the vehicle, and/or onto different tires of a same type, are applied to the tire and/or to the different tires, wherein values of the first quantity are determined for each of the load profiles, wherein these values of the first quantity for each of the load profiles are transmitted to the evaluation device and wherein the deterioration model is defined based on these values of the first quantity for each of the load profiles.

It should be noted that different tires of the same type can be installed on the vehicle at the same time and/or can be installed on the (first) vehicle or on another vehicle (preferably another vehicle of the same type as the first vehicle) during different time intervals. Therefore, it is for example possible to mount a first tire to the first vehicle and to apply a first load profile and, later, to mount a second tire of the same type to the first vehicle and to apply a second load profile. The different load profiles lead to different developments of the deterioration of the tires and different load profiles enhance the quality of the deterioration model (in the process of developing and/or fitting the model) or of the machine learning algorithm during training. This procedure is in particularly useful with respect to an embodiment of the method of preparing forecast. On the other hand, with respect to the method for forecasting a lifespan, the different load profiles may be load profiles that describe the load as a function of time during operation of the vehicle.

According to a preferred embodiment of the method, it further comprises determining a value of a first parameter, the first parameter being a track condition parameter that describes a condition of a track on which the vehicle travels. It is an essential finding of the inventors that the condition of the track, in some cases, significantly affects the deterioration (in particular the process of fatiguing the tire sidewalls) of the tire.

The features mentioned above and other features of embodiments of the present invention will become more apparent from the following description in which reference is made to the appended drawings wherein:

Fig. 1    is side view of a monorail vehicle,

Fig. 2    is an isometric view, partly cut away, of a guide beam for guiding a monorail vehicle and of a bogie of such a vehicle;

Fig. 3    schematically represents an embodiment of the method for forecasting the lifespan of a tire; and

Fig. 4    schematically shows an arrangement for forecasting a lifespan of a tire.

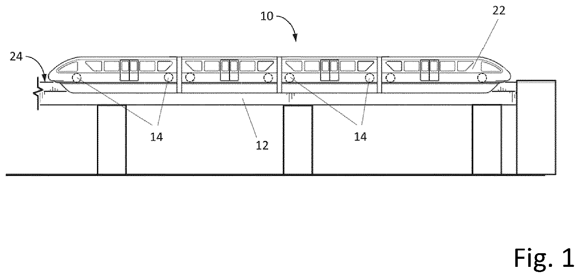

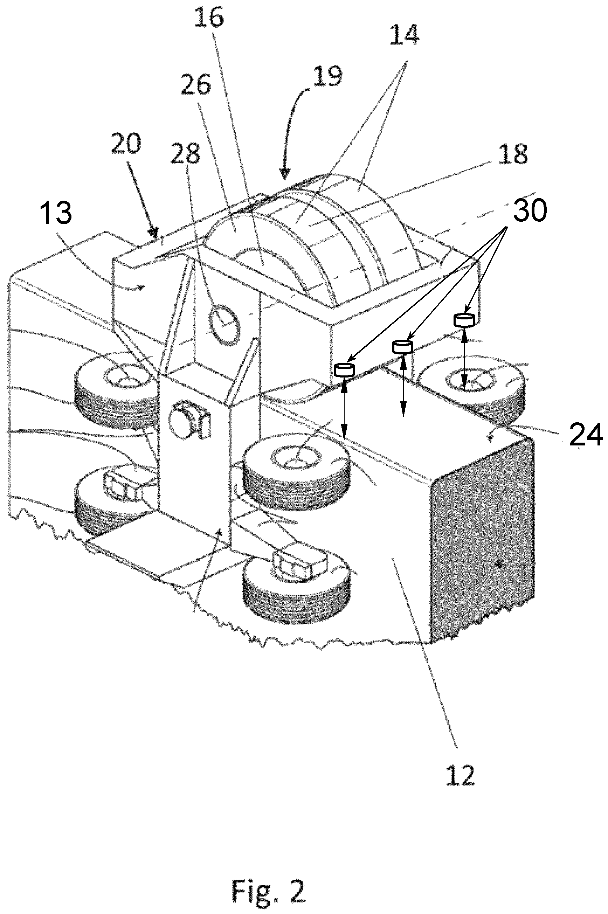

Fig. 1 shows a vehicle 10, particularly a track-bound mass-transit vehicle, and more particularly in the present non-limiting example, a monorail vehicle adapted to travel on a guide beam 12. The vehicle 10 is equipped with load wheels 14 supporting the weight of the vehicle 10 as well as that of passengers, or cargo and/or goods, taking place within a passenger compartment of the vehicle 10. As shown in Fig. 2, each load wheel 14 comprises a rim 16 and a tire 18. For vehicles supporting a heavy load, load wheels 14 may be assembled into a wheel set 19. Such wheel sets 19 may comprise two or more load wheels 14 assembled together.

Fig. 2 shows a bogie 20 through which the load wheels 14 are connected to a vehicle body 22 (see Fig. 1) of the vehicle 10. In other types of vehicles, for example in buses or trucks, the load wheels 14 may be connected to the body 22 through suspension linkages. For example, as mentioned before, the vehicle can be in particular an automated people mover (APM).

As the vehicle 10 travels on a surface, in the case of the monorail, on a running surface 24 of the guide beam 12, a suspension of the vehicle 10 absorbs irregularities in the running surface by compressing and extending so as to provide comfort to passengers. The suspension also extends or compresses under dynamic forces acting on the body 22, for example when accelerating, decelerating or when the vehicle 10 turns in a curve. Although the load wheels 14 are not, strictly speaking, part of the suspension, the tires 18, with their deformable nature, show characteristics similar to those of a combination of springs and dampers and therefore also contribute to the suspension of the vehicle. Indeed, as the vehicle 10 travels over the running surface 24, sidewalls 26 of at least a portion of the tire 18 coming in contact with the running surface 24 momentarily deforms under the load imposed by the vehicle onto the load wheel 14. Moreover, the extent of this continuous deformation in the sidewalls 26 of the tire 18 may vary as the vehicle 10 travels over the running surface 24 because the running surface 24 is often not completely flat and rather comprises irregularities such as bumps or depressions. This dynamic variation of the tire 18 deformation is called vertical bounce. Tire deformation may be calculated by subtracting the measured distance between a spinning axis 28 of the load wheel 14 (or any other reference point which height does not vary with respect to the spinning axis 28) and the running surface 24 from the undeformed radius of the tire 18. Vertical Bounce may be calculated by continuously measuring tire deformation while the vehicle 10 is in motion and comparing it with the tire deformation (e.g. by using a reference value) when the vehicle 10 is static and subjected to the same load. For example, a reference measurement of tire deformation may be taken when the vehicle 10 is stopped at a station, with passengers onboard and doors closed. This typically occurs right before the vehicle 10 leaves the station. Then, as the vehicle 10 travels on the running surface 24 towards the next station, tire deformation may be continuously measured. Variations in tire deformation when compared to the reference measurement taken at the previous station (Static deformation) is therefore the vertical bounce (dynamic deformation). It has been found that for vehicles operating with highly loaded tires 18, this vertical bounce, or the variation of deformation of the sidewalls 26 of the tires 18 is an important contributor to determining the lifespan of the tires 18.

Fig. 2 schematically shows three sensors 30 which allow for the determination of the load, for example for taking sensor readings while the vehicle 10 is stopped at a station. The number of three sensors 30 is an example only and the number may vary for different embodiments. The sensors 30 may, for example, each record the relative distance of the bogie frame 13 to the beam 12. Subject to the load on the tire, speed and condition of the track the magnitude and amplitude of the signal variation will be different. In particular, it is also possible that there is only a single load sensor 30. Furthermore, this kind of load sensors are not necessarily required during operation of the vehicle. Rather, the load can be determined by other procedures, such as by measuring the acceleration taking into account the traction force in order to determine the mass of the vehicle, as mentioned above.

In the example shown in Fig. 2, the three load sensors 30 may be laser sensors that are designed to measure the distance in each case of the bogie, or of a component that is fixed relative to the bogie, to the track, in this case to the running surface 24.

In addition or alternatively, there may be at least one ultrasonic sensor that may be fixed to the bogie or to a component that is fixed relative to the bogie. This ultrasonic sensor is designed to measure the distance to the running surface 24 or to another surface of the track. In contrast to laser sensors, it is reasonable to have the ultrasonic sensor mounted to the vehicle during normal operation. Therefore, while laser sensors may be present only to develop the aging model, ultrasonic sensors may be used as load sensors during normal operation while the aging of the tire occurs.

In practice however, the running surface 24 may be not even and a different technique to measure the load may be applied. For example, an ultrasonic sensor may be arranged on the vehicle to measure the height position or the extension in height direction of a part of the suspension system. The higher the load, the lower the height position or the smaller the extension in height direction.

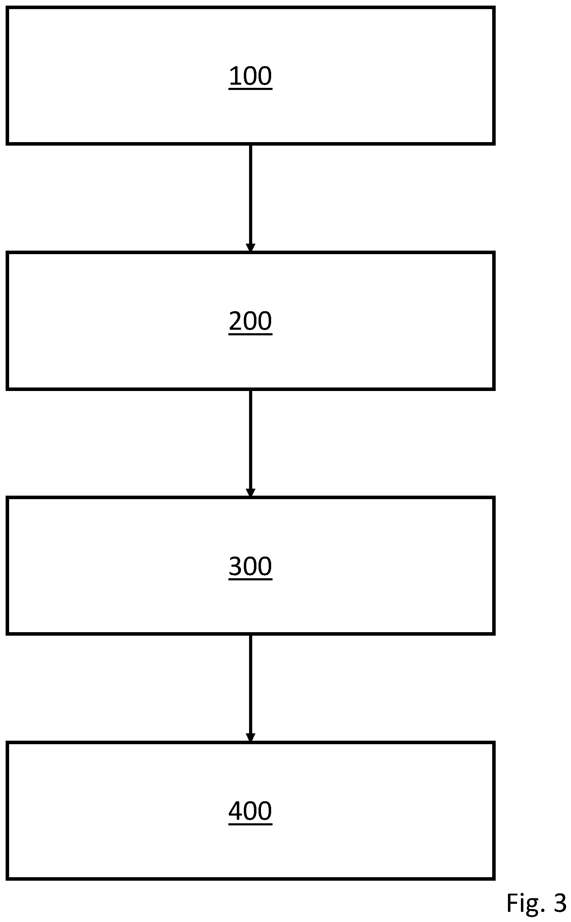

Fig. 3, now concurrently referred to, schematically represents an embodiment of the method for forecasting the lifespan of a tire, such as tire 18 installed on vehicle 10.

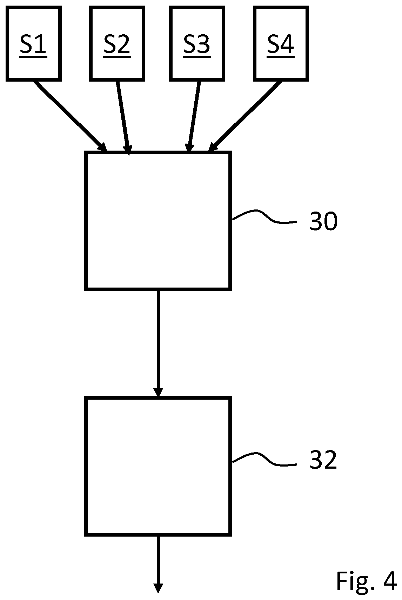

Fig. 4 shows a determining device 30 configured to repeatedly determine a value of a first quantity. Optionally, as shown at the top of Fig. 4, there may be any number of sensors for measuring variables that influence the aging of the tire. In the specific example shown, there are four sensors S1, S2, S3, S4. Each sensor has an output that is connected to an input of the determining device 30. On the other hand, the determining device 30 has an output for transmitting the values determined based on the information provided by the at least one sensor to a forecasting device 32. An output of the forecasting device 32 indicates that a forecasted lifespan of the tire can be output. In particular the arrangement shown in Fig. 4 may perform the method illustrated in Fig. 3.

The method illustrated in Fig. 3 comprises a first step 100 of determining a value of a first quantity which is an indication of the deformation of the tire 18. Preferably, the first quantity is the load imposed by the vehicle 10 onto the tire 18 installed on the vehicle 10. It shall be noted here that the term "determining" is understood as meaning directly or indirectly measuring, calculating, or arriving in any known way to the value of the sought quantity.

For example, deformation of the tire 18 may optionally be determined as well. There are at least two ways: as explained above, by subtracting the measured distance between the spinning axis 28 of the load wheel 16 and the running surface 24 from the undeformed radius of the tire 18, or by correlating such tire deformation with measured load carried by the vehicle 10. This correlation may be achieved, for example, by building a table or a graph of tire deformation as a function of loads for a given tire pressure. For more accuracy, the load carried by the vehicle may be measured at each load wheel 14, thereby providing specific information for determining more precisely the deformation of each tire 18.

Generally speaking, bounce and tire lifespan may be, to different extents, dependent on both static and dynamic parameters. Hence, for an improved assessment and forecast of lifespan, a measuring (or determining) at least one second quantity may be conducted, according to a second step 200 of the method illustrated in Fig. 3. It should be noted that execution of the first step 100 and of the second step 200 may overlap, i.e. may at least partly be performed during the same time interval. Alternatively, the underlying information for the determination of the first quantity and of the second quantity may be collected during operation of the vehicle, wherein operation also includes time intervals during which the vehicle does not move.

This second quantity may be one or more of the following: vehicle weight and passenger or cargo weight, as well as its distribution over each tire 18 of the vehicle 10, speed of vehicle 10, rotational speed of the load wheels 14, acceleration or deceleration of the vehicle 10, internal pressure of tire 18 and temperature of tires 18. Ambient temperature and other usage parameters such as distance travelled by the tire 18 under each static and dynamic parameter also influence tire life span. Many of these quantities and/or of corresponding parameters may be measured directly (for example, the ambient temperature) or indirectly (for example, deformation of the tire 18). Some of the second quantities can only be measured while the vehicle is in motion (for example, acceleration).

Of course, not only one second quantity or, as named above; "further quantity" may be measured or determined, but in particular any combination of the quantities and/or corresponding parameters mentioned in this description.

Measurements or determination of either first quantity and second quantity may be conducted at predetermine time intervals, or at set events. For example, the load may be determined when the vehicle 10 has closed its doors and is about the depart from a station. This event corresponds to the moment when the load carried by the vehicle 10 may be measured as it is known to remain constant until the next station. Other quantities, such as ambient temperature, are more logically measured at predetermined time intervals. These predetermined time intervals or events may be the same, or different for the first and at least one second quantity.

The third step 300 of the method is transmitting the values of the first quantity, and optionally of the at least one second quantity and/or of a parameter corresponding to the respective second quantity to a forecasting device. Transmitting may also occur at predetermined time intervals, or at predetermined events. This transmitting may be conducted simultaneously to the first step 100 and/or the second step 200, that is in real time. This is preferred in particular if the forecasting device is located aboard the vehicle 10. Alternatively, measurements may be stored in internal memory, for example at this predetermined first time interval, and then transmitted to the forecasting device for further processing, e.g. at a second predetermined time interval, for example each day. This may be preferable when the forecasting device is located remotely from the vehicle 10.

Following transmitting, the next, fourth step 400 is calculating a forecasted lifespan of the tire based on tire deformation, and optionally also based on one or more of the second quantities/parameters. This is typically done using at least one computer.

The calculating may involve continuously revising the forecasted lifespan of the tire based on subsequent measurements of the first parameter and optionally any further parameter(s). Indeed, as more measurements of the first quantity and optionally at least one second quantity and/or parameter are gathered and analyzed, the forecasting device may repeatedly or continuously revise its forecast of the tire lifespan. For example, if the values are daily sent to the controller, the calculating may involve calculating a cumulative tire wear index indicative of a cumulative wear of the tire. This tire wear index may, for example, be expressed in percentage of life used or remaining. Alternatively, the forecasted lifespan may be expressed in units of distance remaining. As the tire wear index approaches its end of life indication, its replacement with a new tire may be planned. As the tire wear index reaches its end of life indication, the used tire may be dismounted and replaced with a new one.

Although the present method of forecasting a tire lifespan is theoretically applicable to any type of vehicle, it is better adapted to heavy vehicles such as track-bound and/or mass-transit vehicles which are used on well controlled environments and preferably in a repeatable or even automated method. For example, automated monorails operating on dedicated guide beams and in a fully automated manner (driverless) are good candidates. In particular, the invention can be applied to tires of automated people movers, typically used in airports to carry travelers from one terminal to another or can be applied to tire-equipped subway cars, both operating using dedicated guideways.

An example of the method of preparing the forecast of the lifespan of a tire is described in the following.

First, an equation is established that takes into account quantities which influence the tire's lifespan. These quantities are, in this example, the travelled distance, the load imposed by the vehicle onto the tire and the load profile of the track. The equation allows to determine a quantity y that defines the damage caused with respect to the tire. According to a specific embodiment, it can be assumed that the tire will be subject to the same extent of damage per travelled distance (i.e. caused by the same load and under the same load profile and optionally, if considered, at the same temperature and the same tire pressure). Alternatively, other assumptions can be made for the future use of the tire, for example a different load or different loads under a different load profile or under different load profiles. Taking the respective assumptions into account, the damage y can be used to calculate the forecasted lifespan LOC ("Limit Of Course"), in particular the expected travel distance over which the tire can still be used until a defined grade of damage is reached, of the tire. The relation between the damage y and the forecasted lifespan LOC can be described by:

$$y = log(LOC),$$

wherein log is the logarithm function and log(LOC) is therefore the logarithm function of the forecasted lifespan LOC. The damage y may be stated as a polynomial equation of the mass x = log(tire load) (which defines the load) of the vehicle:

$$y = a*x^2 + b*x + c$$

Herein, a and b are coefficients and c is a constant which can be fitted by using test results or during the regular operation of the vehicle, wherein the test is performed for a specific track (with a known travel distance, for example between a first station and a second station) under a specific load and according to a specific load profile that is characteristic for the track.

Since y describes the damage over a travelled distance or over a distance to be travelled, a sum of all damages for travelled distances or distances to be travelled may be calculated and the forecasted lifespan corresponds to the value of the sum that is defined as the maximum tolerable damage. If this maximum tolerable damage is reached, the tire needs to be replaced and has therefore reached the end of his lifespan. Other types of equations may be used to describe the damage caused over (a) travelled distance(s) or (a) distance(s) to be travelled, for example by using a hyperbolic function or an exponential function.

Optionally, the load profile of the track can be an individual load profile for each of the different tires of the same vehicle. The load profile of each tire can be quantified as amplitude of oscillations of that tire, $DLT_{ij}$, for example for the left-hand tire of the front bogie of a monorail vehicle, $DLT_{1L}$, for the right-hand tire of the front bogie of the monorail vehicle, $DLT_{1R}$, for the left-hand tire of the back bogie of the monorail vehicle $DLT_{2L}$ and for the right-hand tire of the back bogie of the monorail vehicle, $DLT_{2R}$. In the example considered here, each wagon in the monorail application has two bogies.

In the example described here, the coefficients $A_{i,j}$ and $B_{i,j}$ and the constant $C_{i,j}$ may have been determined from the test to define the dynamic amplitude of the loading of the tires, $DLT_{ij}$ as a function of $x$, load on the tires:

$$DLT_{ij} = k \times (A_{ij} x^2 + B_{ij}x + C_{ij}) \quad with \quad i = 1,2,...,N \mid j = L, R$$

Coefficient $k$ is defined to scale the magnitude of the tires loading as a function of the condition of track while moving from station A to station B. The method to identify the coefficient can be performed in the tested conditions were average and standard deviation of the vertical movements of each tire are measured in different load condition. Moreover, the initial approximation of the coefficient in the test condition can be modified during the conventional operation of the system.

As an example, the condition monitoring system measured addition of 8000 kg of passengers to the wagon while traveling from station A to B. The track conditioning system already identified coefficients of the $DLT_{ij}$ for first left tire as:

$$DLT_{1L} = 1.04 \times (-2.022 \times 10^{-8} \, x^2 + 1.58 \times 10^{-3} \, x + 7.303 \times 10^{-2}):$$

For x as of 8000 kg or 78 480 N, the amplitude of oscillations of tire will be 11.876 mm that interpreted as a measure of the tire bounce.

The calculated $DLT_{1L}$ = 11.876 $mm$ is used to calculate the equivalent mass of 8366 kg or 82 070 N.

Depending on the conditions of loading, irregularities of the track and distribution of the curves from station A to B, the scaling of the equivalent mass and coefficients in $DLT_{ij}$ formulation will be different.

Considering a given tare weight of the wagon in empty condition, 13900 kg in this example, the load on 1L tire can be calculated as:

$$\frac{13900 + 8366}{4} = 5566.5 \, kg \; or \; 54602 \, N$$

The calculated load on each tire is used in the LOC formulation with the identified coefficients as:

$$y = -1.0141 \, x + 8.824$$

$$y = -1.0141 \times \log_{10} 5566.5 + 8.824 = 5.0256$$

So, the LOC (limit of course) is $10^{5.0256}$ = 106073 $km$ if the only 5566.5 kg or 57602N load is applied to the tire.

Finally, it is a known value that the distance between station A and B were 1.041 km so the percentage of the consumed life of the designated tire is calculated based on Minor's law:

$$\sum_{i=1}^{1} \frac{n_i}{N_i} = \frac{1.041 \, km}{10 \, 6073 \, km} = 9.81 \times 10^{-4} \, \% \; of \; the \; tire \; life$$

The same way we calculate wear for all stations the train goes through and this for each tire of a car. This methodology can be used for and modified for short movements as low as one rotation of tire to larger distances.

It should be noticed that in step 2, the goal was solving for mass and then calculating the LOC. In practice, LOC according to deformation can directly be found. For example, for each load profile, a polynomial of x can be defined as an implementation of the deterioration model (aging model, in the example described above, the model describing the damage y), in particular a polynomial of x and $x^2$. This polynomial includes a constant and constant factors of x and $x^2$. These three constants can be determined for the respective load profile and for the tracks having their respective travel distance beforehand, such as by performing the method of preparing forecasting the lifespan of a tire.

In addition, the specific example of an tire life model described above included a certain load that is equivalent to the mass of the vehicle with the passengers onboard. If the vehicle travels with a different load or different number of passengers, or if the assumption is made that the vehicle will travel with a different mass, the tire life model can be corrected accordingly. In order to be able to perform the correction, tests can be performed for different loads (in particular different vehicle masses).

Furthermore, other influence quantities as mentioned above, such as temperature of the tire, temperature of the ambience of the tire and/or pressure within the tire (with respect to the unloaded vehicle or with respect to the loaded vehicle), can be considered to improve the accuracy of the tire life span. By performing respective tests with different values of these quantities, corresponding correction factors can be determined, and these corrections or alterations can be made to the tire life model. Alternatively, instead of performing corrections/alterations, an ageing model can be defined that includes at least one term for the respective influence quantity. The term comprises a variable that assumes the respective value of the quantity.

There are different types of wear in tires, in particular abrasive wear and material fatigue. In particular the material fatigue may depend on the structure of the tire, in particular of the rubber compound of the tire, any metallic wire used in the tire and/or any bounding agent used in tire for connecting different layers/parts together. In addition, there may be different reasons for the wear of the tire. In particular, some reasons might cause fast deterioration, such as tire rolling with sideslip. For example, the wear may be closely related to the constructive characteristics of the vehicle such as kingpin angle, caster angle and steering geometry. Some of these parameters may be not present for specific types of vehicles, such as monorail vehicles, or may not be taken into account if a smaller precision in the result of the forecasting is accepted. Other influences on the tire wear or tire deterioration include road/track surface quality and conditions on the road/track. In this perspective, the track for monorail vehicles has an influence on tire wear, because of its specific construction irregularities.

## Claims

1. A method for forecasting a lifespan of a tire (18) installed on a vehicle (10), the method comprising:

   - repeatedly determining a value of a first quantity, the first quantity being a measure for a load imposed by the vehicle (10) onto the tire (18) installed on the vehicle (10);
   - transmitting the determined values of the first quantity to a forecasting device; and
   - using the forecasting device, calculating a forecasted lifespan of the tire (18) based on the determined values of the first quantity.

2. The method of claim 1, further comprising:

   - repeatedly determining a value of a further quantity, the further quantity being at least one of a measure for a speed of the vehicle (10), a rotational speed of the tire (18), a distance travelled by the vehicle (10), a distance travelled by the tire (18), an acceleration of the vehicle (10), a deceleration of the vehicle (10), a load carried by the vehicle (10), a torque of a motor driving the tire (18), a temperature of the tire (18), a pressure of the tire (18) and a vehicle ambient temperature;
   - transmitting the further quantity to the forecasting device; and
   - calculating the forecasted lifespan by using the forecasting device based on the determined values of the further quantity.

3. The method of claim 1 or 2, wherein calculating a forecasted lifespan of the tire (18) is repeated based on additional and/or updated values of the first quantity.

4. A method of preparing forecasting the lifespan of a tire (18) installed on a vehicle (10), wherein the method comprises:

   - repeatedly determining a value of a first quantity, the first quantity being a load imposed by the vehicle (10) onto the tire (18) installed on the vehicle (10);
   - determining an aging state of the tire (18) based on at least one tire aging state quantity after use of the tire (18);
   - defining or obtaining a criterion for an end of a lifespan of the tire (18), wherein fulfilment of the criterion can be determined by consideration of the at least one tire aging state quantity;
   - transmitting the determined values of the first quantity and of the aging state to an evaluation device; and
   - by using the evaluation device, defining an aging model that allows to forecast a lifespan of the tire (18) depending on the first quantity.

5. The method of claim 4, wherein different load profiles, namely the load as a function of time imposed by the vehicle (10) onto the tire (18) installed on the vehicle (10), and/or onto different tires of a same type, are applied to the tire (18) and/or to the different tires, wherein values of the first quantity is determined for each of the load profiles, wherein these values of the first quantity for each of the load profiles are transmitted to the evaluation device and wherein the aging model is defined based on these values of the first quantity for each of the load profiles.

6. The method of one of claims 1 to 5, wherein the method further comprising:

   - determining a value of a first parameter, the first parameter being a track condition parameter that describes a condition of a track on which the vehicle (10) travels.

7. The method of one of claims 1 to 6, wherein the values of the first quantity are determined at least partly for points in time or time intervals during travel of the vehicle (10).

8. The method of one of claims 1 to 7, wherein the vehicle (10) is a track-bound vehicle (10), in particular a monorail vehicle (10).

9. Arrangement for forecasting a lifespan of a tire (18) installed on a vehicle (10), the arrangement comprising:

   - a determining device (30) configured to repeatedly determine a value of a first quantity, the first quantity being a measure for a load imposed by the vehicle (10) onto the tire (18) installed on the vehicle (10); and
   - a forecasting device (32) configured to calculate a forecasted lifespan of the tire (18) based on the determined values of the first quantity.

10. Arrangement of claim 9, wherein the determining device and the forecasting device each comprise a connection for connecting them to a data transmitting arrangement that allows for transmission of the determined values of the first quantity from the determining device to the forecasting device.

11. Arrangement of claim 9 or 10, wherein the vehicle (10) is a mass-transit vehicle, in particular a monorail vehicle (10).

12. Arrangement of one of claims 9 to 11, wherein at least one sensor for obtaining information about the first quantity is located on board the vehicle (10) and wherein the sensor is communicatively connected to the determining device and the arrangement is adapted to transmit the information about the first quantity to the determining device so that the determining device is capable of determining the values of the first quantity.

13. Computer-implemented method for providing a trained machine learning algorithm for forecasting a lifespan of a tire (18) installed on a vehicle (10), the method comprising:

   providing a first training data set comprising a plurality of values of a first quantity,
   the first quantity being a measure for a load imposed by the vehicle (10) onto the tire (18) installed on the vehicle (10);
   providing a second training data set comprising values of a forecasted lifespan of the tire (18), wherein respective values of the first training data set and the second training data set are provided as training pairs; and
   training the machine learning algorithm by an optimization algorithm which computes an extreme value of a loss function.

14. Computer-implemented method for forecasting a lifespan of a tire (18) installed on a vehicle (10), the method comprising:

   receiving a time series of values of a first quantity, the first quantity being a measure for a load imposed by the vehicle (10) onto the tire (18) installed on the vehicle (10);
   applying a machine learning algorithm to the time series of values of the first quantity in order to forecast a lifespan of a tire (18) installed on a vehicle (10); and outputting a score representing the lifespan of the tire (18) installed on a vehicle (10).

Fig. 1

Fig. 2

Fig. 3

| S1 | S2 | S3 | S4 |

30

32

Fig. 4

Europäisches
Patentamt
European
Patent Office
Office européen
des brevets

# EUROPEAN SEARCH REPORT

Application Number

EP 23 30 6993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/015780 A1 (MICHELIN RECH TECH [CH]; MICHELIN SOC TECH [FR] ET AL.) 31 January 2013 (2013-01-31) | 1-3,7-12 | INV. B60C11/24 B60C23/06 |
| A | * paragraph [0004] - paragraph [0046]; claims 1-19; figures 1-5 * | 4-6,13, 14 | |
| X | US 2022/024259 A1 (FRAENKEL ANNE-LAURE [FR] ET AL) 27 January 2022 (2022-01-27) | 1-4,6-12 | |
| A | * paragraph [0005] - paragraph [0151]; figures 1-6 * | 5,13,14 | |
| A | US 2022/017090 A1 (SAMS THOMAS A [US] ET AL) 20 January 2022 (2022-01-20) * paragraph [0013] - paragraph [0198]; figures 1,2,13-25 * | 1-14 | |
| A | US 2022/219498 A1 (AGARWAL SHASHANK [IN] ET AL) 14 July 2022 (2022-07-14) * paragraph [0005] - paragraph [0077]; figures 1-11 * | 1-14 | TECHNICAL FIELDS SEARCHED (IPC) |
| A | WO 2022/219841 A1 (BRIDGESTONE CORP [JP]) 20 October 2022 (2022-10-20) * see the enclosed translation of the description; figures 1-6 * | 1-14 | B60C |

The present search report has been drawn up for all claims

| Place of search | Date of completion of the search | Examiner |
|---|---|---|
| Munich | 8 April 2024 | Jung, Wolfgang |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...........................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

**EP 23 30 6993**

This annex lists the patent family members relating to the patent documents cited in the above-mentioned European search report.
The members are as contained in the European Patent Office EDP file on
The European Patent Office is in no way liable for these particulars which are merely given for the purpose of information.

**08-04-2024**

| Patent document cited in search report | Publication date | Patent family member(s) | Publication date |
|---|---|---|---|
| WO 2013015780 A1 | 31-01-2013 | NONE | |
| US 2022024259 A1 | 27-01-2022 | CN 113424039 A | 21-09-2021 |
| | | EP 3894825 A1 | 20-10-2021 |
| | | FR 3090103 A3 | 19-06-2020 |
| | | FR 3090104 A1 | 19-06-2020 |
| | | JP 7459106 B2 | 01-04-2024 |
| | | JP 2022514228 A | 10-02-2022 |
| | | KR 20210101284 A | 18-08-2021 |
| | | US 2022024259 A1 | 27-01-2022 |
| US 2022017090 A1 | 20-01-2022 | CN 113748030 A | 03-12-2021 |
| | | CN 116890577 A | 17-10-2023 |
| | | EP 3946983 A1 | 09-02-2022 |
| | | EP 4257376 A2 | 11-10-2023 |
| | | EP 4261050 A2 | 18-10-2023 |
| | | EP 4261051 A2 | 18-10-2023 |
| | | JP 7329068 B2 | 17-08-2023 |
| | | JP 2022521836 A | 12-04-2022 |
| | | JP 2023145737 A | 11-10-2023 |
| | | US 2022016938 A1 | 20-01-2022 |
| | | US 2022016940 A1 | 20-01-2022 |
| | | US 2022016941 A1 | 20-01-2022 |
| | | US 2022017090 A1 | 20-01-2022 |
| | | WO 2020205703 A1 | 08-10-2020 |
| US 2022219498 A1 | 14-07-2022 | EP 4015250 A1 | 22-06-2022 |
| | | US 2022219498 A1 | 14-07-2022 |
| WO 2022219841 A1 | 20-10-2022 | CN 117120281 A | 24-11-2023 |
| | | EP 4292836 A1 | 20-12-2023 |
| | | JP 2022162705 A | 25-10-2022 |
| | | WO 2022219841 A1 | 20-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012266649 A1